# EUROPÄISCHE PATENTSCHRIFT

(11) **EP 2 318 240 B1**
(45) Veröffentlichungstag und Bekanntmachung des Hinweises auf die Patenterteilung: **25.12.2013**
(21) Anmeldenummer: 09745678.4
(22) Anmeldetag: 06.05.2009
(51) Int. Cl.: B60S 1/08

(54) **SCHEIBENWISCHEREINRICHTUNG MIT EINER STEUERUNGSEINRICHTUNG ZUM STEUERN DER ENERGIEAUFNAHME EINER ANTRIEBSVORRICHTUNG DER SCHEIBENWISCHEREINRICHTUNG**
WINDSCREEN WIPER DEVICE WITH A CONTROL UNIT FOR CONTROLLING ENERGY CONSUMPTION OF A DRIVING UNIT OF THE WINDSCREEN WIPER DEVICE
DISPOSITIF D'ESSUIE-GLACE AVEC UN DISPOSITIF DE COMMANDE POUR CONTRÔLER LA CONSOMMATION D'ÉNERGIE DE UNITÉ D'ENTRAÎNEMENT DU DISPOSITIF D'ESSUIE-GLACE

(30) Priorität: 16.05.2008 DE 102008001816
(43) Veröffentlichungstag der Anmeldung: 11.05.2011
(73) Patentinhaber: Robert Bosch GmbH, 70442 Stuttgart (DE)
(72) Erfinder: ZIMMER, Joachim, 77880 Sasbach (DE)
(86) Internationale Anmeldenummer: PCT/EP2009/055471
(87) Internationale Veröffentlichungsnummer: WO 2009/138345

(56) Entgegenhaltungen:
- EP-A2- 1 614 594
- DE-A1- 4 033 332
- DE-A1- 10 009 797
- DE-A1- 10 144 985
- US-A- 6 144 906

## Beschreibung

### Stand der Technik

Die Erfindung betrifft eine Scheibenwischereinrichtung mit einer Steuerungseinrichtung zum Steuern der Energieaufnahme einer Antriebsvorrichtung der Scheibenwischereinrichtung, sowie ein Verfahren zum Steuern der Scheibenwischereinrichtung. Die Scheibenwischereinrichtung ist hierbei beispielsweise eine Heck- oder Frontscheibenwischereinrichtung eines Kraftfahrzeugs.

Aus dem Stand der Technik, wie er in der DE 101 44 985 A offenbart ist, ist ein Verfahren zur Steuerung einer Scheibenwischervorrichtung bekannt. Hierbei bestimmt eine Steuerungseinrichtung zum Steuern einer Antriebseinrichtung der Scheibenwischervorrichtung das abgebare Drehmoment der Antriebseinrichtung in Abhängigkeit von dem Übersetzungsverhältnis des Scheibenwischergestänges bzw. dessen Drehwinkels. Der Drehwinkelbereich einer Motorkurbel des Scheibenwischergetriebes ist hierbei in mehrere Winkelbereiche aufgeteilt, denen jeweils ein eigenes maximales Drehmoment zugeordnet ist.

Aus EP 1 614 594 A2, DE 40 33 332 A1, DE 100 09 797 A1 und US 6,144,906 A sind Scheibenwischereinrichtungen für ein Kraftfahrzeug bekannt, wobei die Scheibenwischereinrichtung wenigstens eine Antriebsvorrichtung aufweist, die über eine Steuerungseinrichtung steuerbar ist. Die Steuerungseinrichtung steuert den Leistungsbedarf der Scheibenwischereinrichtung in Abhängigkeit von Parametern, die einen Einfluss auf den Leistungsbedarf der jeweiligen Antriebsvorrichtung der Scheibenwischereinrichtung haben, wobei die Parameter mindestens die Fahrgeschwindigkeit und/oder den Scheibenzustand umfassen.

Gemäß der Erfindung wird nun eine Scheibenwischereinrichtung bereitgestellt, wobei die Scheibenwischereinrichtung wenigstens eine oder mehrere Antriebsvorrichtungen aufweist, welche über eine Steuerungseinrichtung steuerbar sind. Die Steuerungseinrichtung ist hierbei derart ausgebildet, dass sie den Leistungsbedarf der Scheibenwischereinrichtung in Abhängigkeit von wenigstens einem oder mehreren Parametern steuert, die einen Einfluss auf den Leistungsbedarf der jeweiligen Antriebsvorrichtung der Scheibenwischereinrichtung haben. Die Parameter umfassen dabei mindestens die Fahrgeschwindigkeit und/oder den Scheibenzustand.

Die Scheibenwischereinrichtung gemäß der Erfindung hat hierbei den Vorteil, dass die Leistung der Antriebsvorrichtung oder Antriebsvorrichtungen der Scheibenwischereinrichtung abhängig von dem tatsächlichen Leistungsbedarf gesteuert werden können. Mit anderen Worten, da der Leistungsbedarf der Antriebsvorrichtung von der Fahrgeschwindigkeit abhängt, sowie vom Scheibenzustand, kann die Leistung der Scheibenwischereinrichtung so gesteuert werden, dass je nach Fahrgeschwindigkeit bzw. Scheibenzustand immer eine optimale Leistung bereitgestellt werden kann. Dadurch ist ein effizienteres Energiemanagement möglich. In der erfindungsgemäßen Ausführungsform wird ein Leistungsüberschuss der Scheibenwischereinrichtung in eine Batterieeinrichtung eingespeist. Dies hat den Vorteil, dass die Scheibenwischereinrichtung zusätzlich auch als Generator eingesetzt werden kann.

In einer bevorzugten Ausführungsform der Erfindung sind als Parameter, die einen Einfluss auf den Leistungsbedarf der jeweiligen Antriebsvorrichtung der Scheibenwischereinrichtung haben, beispielsweise der Wischhebelwinkel, die Wischbewegungsrichtung, d.h. eine Aufwärts- bzw. eine Abwärtswischbewegung, ein Übersetzungsverhältnis eines Wischhebelgestänges der Scheibenwischereinrichtung und/oder eine Wischergeschwindigkeit bestimmbar. Hierdurch kann die Leistungszuweisung an die Antriebsvorrichtung weiter verfeinert bzw. differenziert werden. Das Übersetzungsverhältnis kann bei Wischermotoren mit einem Wischhebelgestänge zusätzlich berücksichtigt werden, während es bei Wischermotoren mit einem Wischermotordirektantrieb entfällt.

In einer anderen erfindungsgemäßen Ausführungsform kann beispielsweise die Leistung der jeweiligen Antriebsvorrichtung in Abhängigkeit von einer vorbestimmten Fahrgeschwindigkeit und einer Wischerbewegung, d.h. einer Wischeraufwärts- und/oder Wischerabwärtsbewegung, bestimmt und eingestellt werden. Hierzu können ein oder mehrere Kennfelder beispielsweise in einer Speichereinrichtung der Motorsteuerung hinterlegt sein und über die Steuerungseinrichtung abgerufen werden. Die Steuerungseinrichtung kann dabei Teil der Motorsteuerung sein oder Teil der Scheibenwischereinrichtung und beispielsweise mit der Motorsteuerung gekoppelt sein. Dies gilt für alle Ausführungsformen.

Ausführungsbeispiele der Erfindung werden nachstehend anhand der schematischen Figuren der Zeichnung näher erläutert. Es zeigt:
Fig. 1 ein Diagramm in dem der Verlauf der Wischergeschwindigkeit für zwei Wischzyklen dargestellt ist;
Fig. 2 ein Diagramm in welchem der Verlauf des erforderlichen Motormoments einer Scheibenwischereinrichtung bei einer hohen Fahrgeschwindigkeit dargestellt ist;
Fig. 3 ein Diagramm in welchem der Verlauf der Windwiderstandskraft gezeigt ist in Abhängigkeit von der Fahrzeuggeschwindigkeit;
Fig. 4 ein Diagramm in welchem die Luftwiderstandskraft in Abhängigkeit von der Stellung des Wischhebels dargestellt ist;
Fig. 5 ein Diagramm in welchem mehrere Verläufe eines Motormomentenbedarfs dargestellt sind in Abhängigkeit von dem Scheibenzustand und der Wischergeschwindigkeit;
Fig. 6 das Diagramm gemäß Fig. 5, wobei ein Bereich schraffiert eingezeichnet ist, in welchem die Scheibenwischereinrichtung zur Energiegewinnung genutzt werden kann;
Fig. 7 ein Diagramm zur Steuerung einer Antriebsvorrichtung einer Scheibenwischereinrichtung gemäß einer ersten Ausführungsform der Erfindung;
Fig. 8 ein Diagramm zur Steuerung einer Antriebsvorrichtung einer Scheibenwischereinrichtung gemäß einer zweiten Ausführungsform der Erfindung;
Fig. 9 ein Diagramm in welchem ein erstes Beispiel für eine Leistungsreduzierung der Antriebsvorrichtung in Abhängigkeit von einer Fahrzeuggeschwindigkeit angegeben ist, bei einer Aufwärtswischbewegung einer Wischreinrichtung;
Fig. 10 ein Diagramm in welchem ein zweites Beispiel für eine Leistungsreduzierung der Antriebsvorrichtung in Abhängigkeit von einer Fahrzeuggeschwindigkeit angegeben ist, bei einer Aufwärtswischbewegung einer Wischreinrichtung und der Leistungsbedarf bei einer Abwärtswischbewegung;
Fig. 11 ein Diagramm in welchem ein drittes Beispiel für eine Leistungsreduzierung der Antriebsvorrichtung in Abhängigkeit von einer Fahrzeuggeschwindigkeit angegeben ist, bei einer Aufwärtswischbewegung einer Wischreinrichtung; und
Fig. 12 ein Diagramm in welchem ein viertes Beispiel für eine Leistungsreduzierung der Antriebsvorrichtung in Abhängigkeit von einer Fahrzeuggeschwindigkeit angegeben ist, bei einer Aufwärtswischbewegung einer Wischreinrichtung und der Leistungsbedarf bei einer Abwärtswischbewegung.

In allen Figuren sind gleiche bzw. funktionsgleiche Elemente und Vorrichtungen - sofern nichts anderes angegeben ist - mit denselben Bezugszeichen versehen worden.

Aufgrund der Umströmung eines Fahrzeugs, insbesondere bei höheren Fahrgeschwindigkeiten, ergibt sich beim Aufwärtswischen einer Scheibenwischereinrichtung des Fahrzeugs ein geringerer Leistungsbedarf des Wischermotors als beim Abwärtswischen. Beim Abwärtswischen muss entgegen der Luftströmung und der daraus resultierenden Windwiderstandskräfte gearbeitet werden, wodurch ein erhöhter Leistungsbedarf des Wischermotors entsteht. Dieses Verhalten führt beispielsweise bei Rundläufermotoren dazu, dass die Wischgeschwindigkeit beim Aufwärtswischen schneller ist als beim Abwärtswischen. Bei einer Scheibenwischereinrichtung mit einem Reversiermotor wird die Wischgeschwindigkeit durch eine sog. Drehzahlkonstantregelung konstant gehalten. Bei sehr hohen Fahrgeschwindigkeiten wird durch die Windkräfte, die auf die Wischerarme und Wischerblätter wirken, die Scheibenwischereinrichtung sogar angetrieben. Mit anderen Worten, der Wischermotor muss sozusagen die Scheibenwischereinrichtung bremsen, damit die Wischgeschwindigkeit beim Aufwärtswischen nicht zu stark ansteigt.

In modernen Fahrzeugen setzt sich zunehmend die HybridTechnik durch. Es ist also in der Regel sowohl ein Verbrennungsmotor und mindestens ein Elektromotor vorhanden. Der Elektromotor wird durch eine Batterie gespeist. Um ein effizienteres Energiemanagement zu gewährleisten ist es sinnvoll, sowohl den Leistungsverbrauch zu reduzieren als auch Energie zurück zu gewinnen, was bei der Bremsenergie-Rückgewinnung schon realisiert wird.

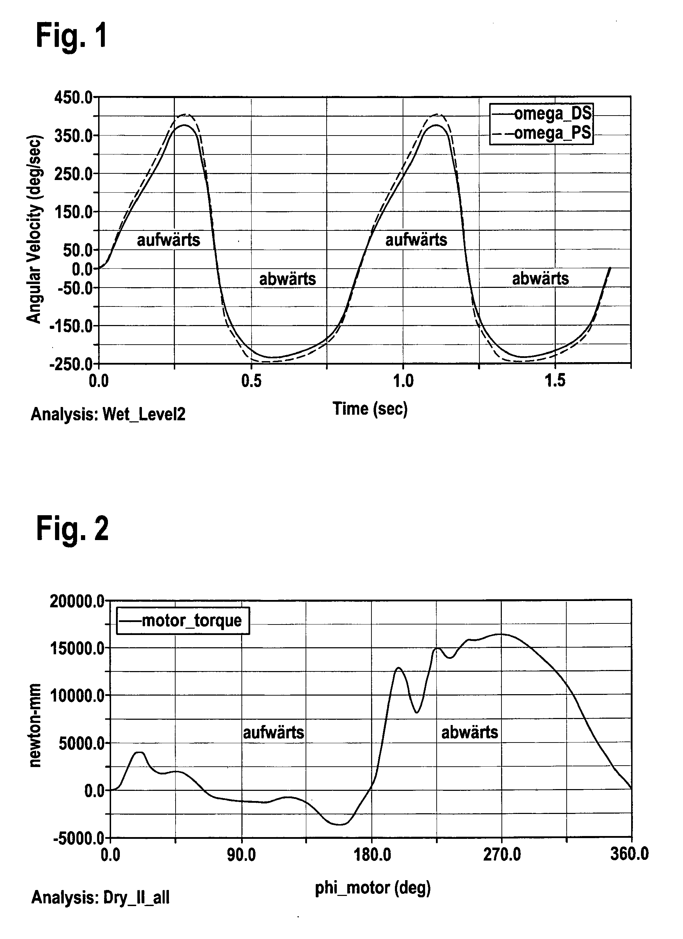

In Fig. 1 ist ein typischer Verlauf der Wischergeschwindigkeit bei einem Rundläufermotor gezeigt (schnelles aufwärts-, langsames Abwärtswischen). Genauer gesagt zeigt das Diagramm, Hierbei ist der Wischzyklus einmal für die Fahrerseite (ome-ga_DS) mit einer durchgezogenen Linie und einmal für die Beifahrerseite (omega_PS) mit einer gestrichelten Linie dargestellt. Aus den beiden Wischzyklen, wie sie in Fig. 1 dargestellt sind, kann entnommen werden, dass die Aufwärtsgeschwindigkeit der Scheibenwischereinrichtung deutlich höher ist als deren Abwärtsgeschwindigkeit. Des Weiteren dauert die Änderung der Bewegungsrichtung von der Abwärts- in die Aufwärtsbewegung länger als von der Aufwärts- in die Abwärtsbewegung.

Des Weiteren ist in Fig. 2 ein Diagramm dargestellt, in welchem der Verlauf des erforderlichen Motormoments einer Scheibenwischereinrichtung bei einer vorbestimmten Fahrgeschwindigkeit gezeigt ist. Im vorliegenden Fall bei einer verhältnismäßig hohen Fahrgeschwindigkeit. Aus dem Diagramm in Fig. 2 kann entnommen werden, dass der Motormomentbedarf bei einer Aufwärtswischbewegung sehr viel kleiner ist als bei einer entsprechenden Abwärtswischbewegung. Des Weiteren steht in einem Bereich einer Winkelstellung zwischen ca. 90° und ca. 180° Energie zur Verfügung, die beispielsweise zur Energiegewinnung genutzt werden kann. In diesem Bereich ist kein Motormoment erforderlich, das über die Antriebsvorrichtung bzw. den Antriebsmotor der Scheibenwischereinrichtung bereitgestellt werden muss, sondern die Scheibenwischereinrichtung liefert selbst Energie bzw. ein Motormoment das zur Energiegewinnung genutzt werden kann. Beispielsweise kann die von der Scheibenwischereinrichtung in diesem Bereich erzeugte Energie in einer Speichereinrichtung, beispielsweise einer Batterieeinrichtung des Fahrzeugs, gespeichert werden. Der in Fig. 2 dargestellte Wischzyklus wurde bei einer trockenen Scheibe durchgeführt.

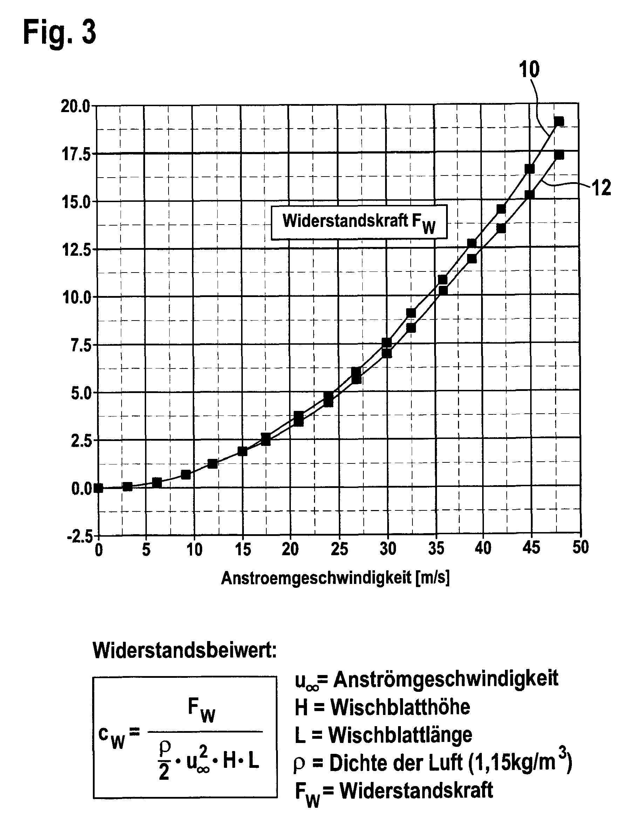

In Fig. 3 ist weiter ein Diagramm dargestellt, das den Verlauf der Windwiderstandskraft [N], aufgetragen über die Fahrgeschwindigkeit von 0km/h (0m/s) bis 180km/h (50m/s) zeigt. Dabei sind zwei Verläufe dargestellt, einmal für die Fahrerseite 10 und einmal für die Beifahrerseite 12. Aus dem Diagramm kann hierbei entnommen werden, dass mit zunehmender Anströmgeschwindigkeit, mit der ein Fahrzeug angeströmt wird, die Windwiderstandskraft deutlich ansteigt. Je schneller ein Fahrzeug also fährt und je höher damit die Anströmgeschwindigkeit ist, um so höher ist auch die Windwiderstandskraft die auf das Wischersystem einwirkt und dem das Wischersystem beispielsweise beim Abwärtswischen entgegenwirken muss.

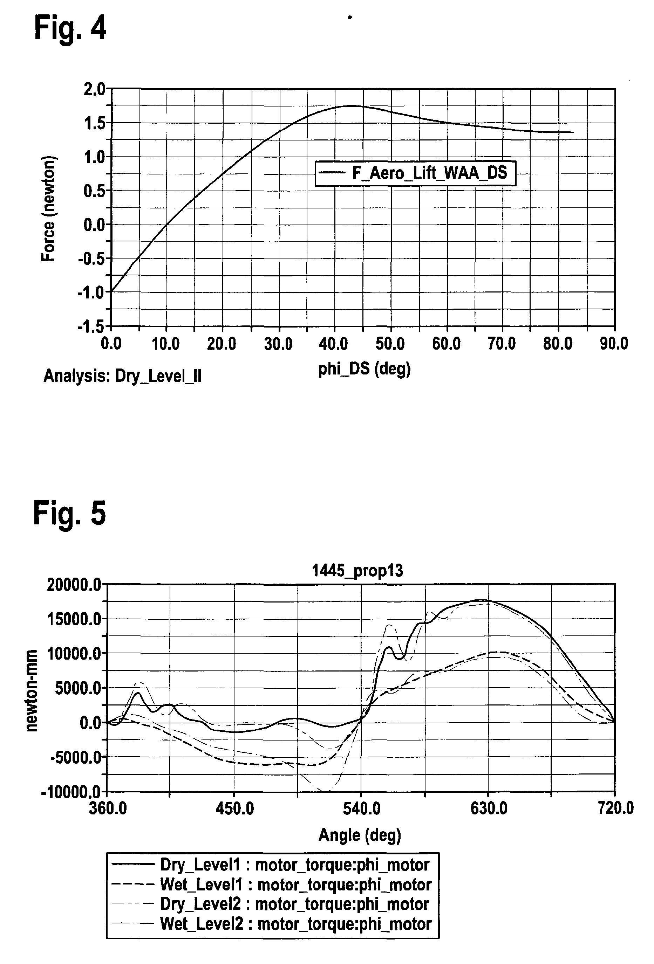

Entsprechend ist in Fig. 4 ein Diagramm dargestellt, in welchem der Strömungseinfluss (Luftwiderstand und Auftrieb) simuliert wird in Abhängigkeit von der Stellung des Wischhebels der Scheibenwischereinrichtung. Das Diagramm zeigt dabei die Luftwiderstandskraft [N] in Abhängigkeit von der Stellung des Wischerhebels (phi_DS(deg)). Hierbei nimmt die Luftwiderstandskraft am Anfang mit zunehmendem Winkel des Wischerhebels stark zu und erreicht bei einem Winkel von ca. 45° ihr Maximum. Ab einem Winkel von 45° und größer geht die Luftwiderstandskraft leicht zurück.

In Fig. 5 sind des Weiteren die Abhängigkeiten des Motormomentbedarfs der Antriebsvorrichtung von dem Scheibenwischerzustand (Reibung nass/trocken) und der Wischergeschwindigkeit (Stufe I/II) gezeigt. Fig. 5 zeigt dabei ein Diagramm in welchem mehrere Verläufe eines Motormomentbedarfs dargestellt sind, abhängig davon, ob die Scheibe nass oder trocken ist und der eingestellten Wischergeschwindigkeitsstufe. Dabei wurde jeweils ein Verlauf für eine trockene Scheibe bei einer Wischerstufe 1 (durchgezogenen Linie), sowie ein Verlauf für eine nasse Scheibe bei der Wischerstufe 1 (lang gestrichelte Linie) erstellt. Des Weiteren wurde jeweils ein Verlauf für eine trockene Scheibe bei einer höheren Wischerstufe 2 (kurz gestrichelte Linie), sowie in Verlauf für eine nasse Scheibe bei der Wischerstufe 2 (strichpunktierte Linie) erstellt. Aus Fig. 5 kann man nun entnehmen, dass bei den beiden Wischergeschwindigkeiten 1 und 2 für eine trockene Scheibe die Verläufe des Motormomentbedarfs jeweils nahe beieinander liegen. Entsprechendes gilt bei einer nassen Scheibe. Des Weiteren ist der Motormomentbedarf bei einer trockenen Scheibe deutlich größer als bei einer nassen Scheibe bei gleicher Wischerstufe, da der Wischer auf der trockenen Scheibe eine größere Reibung erzeugt.

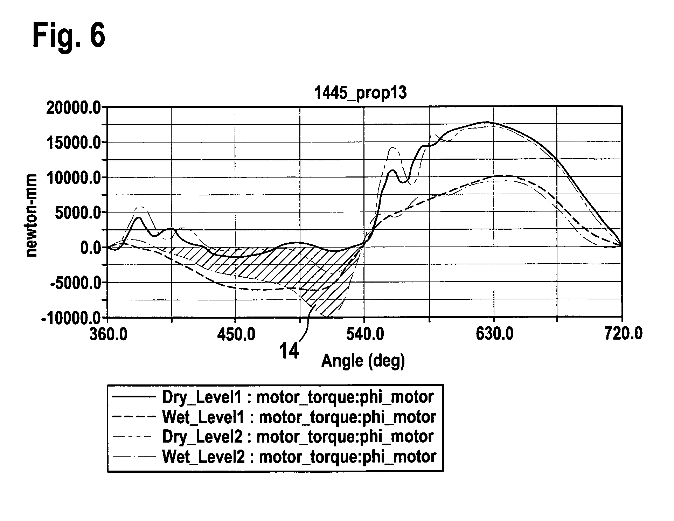

In Fig. 6 ist das Diagramm gemäß Fig. 5 gezeigt. Dabei ist in dem Diagramm der Bereich und das Potential für eine Energiegewinnung eingezeichnet. Dabei ist beispielsweise bei dem Verlauf des Motormomentbedarfs für eine nasse Scheibe, bei einer Fahrzeuggeschwindigkeit von 180km/h und einer Wischergeschwindigkeit der Stufe I ein Bereich 14 schraffiert eingezeichnet, der zur Energiegewinnung genutzt werden kann. Mit anderen Worten, in diesem Bereich 14 kann die Scheibenwischereinrichtung sozusagen Energie liefern und beispielsweise die überschüssige Energie in eine zugeordnete Batterieeinrichtung im Fahrzeug einspeisen. Im Stand der Technik muss dagegen der Wischermotor die Scheibenwischereinrichtung in diesem Bereich abbremsen, um zu verhindern, dass die Geschwindigkeit der Scheibenwischereinrichtung beim Aufwärtswischen zu schnell wird.

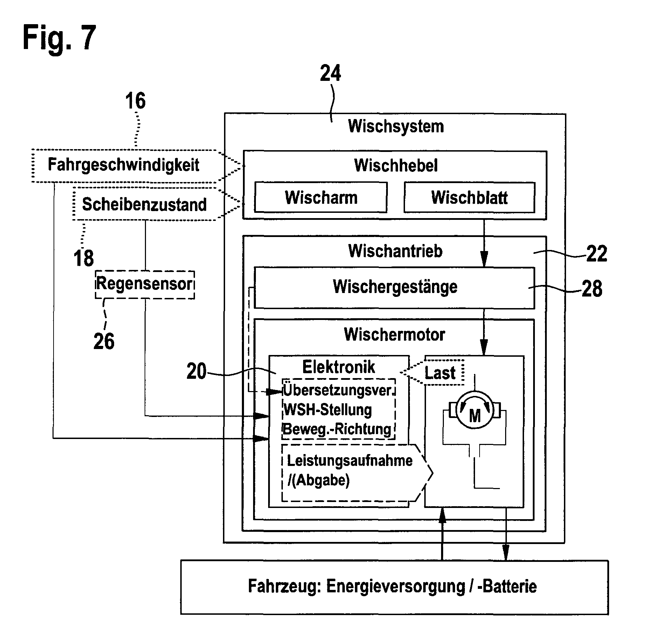

Weiter ist in Fig. 7 der Informationsfluss bei der Nutzung der Fahrzeugsignale (Beispiel: Wischerantrieb mit Wischergestänge) gezeigt. Dabei werden Fahrgeschwindigkeits- und/oder Regensensorsignal-Informationen 16, 18 aus dem Fahrzeug-Bordnetz in der integrierten Steuerelektronik bzw. Steuereinrichtung 20 der Antriebsvorrichtung 22 der Scheibenwischereinrichtung 24 verarbeitet, um den zugehörigen Leistungsbedarf zu berechnen. In dem Diagramm in Fig. 7 ist dabei die Steuerung einer Antriebsvorrichtung 22 einer Scheibenwischereinrichtung 24 gemäß einer ersten Ausführungsform der Erfindung gezeigt. Dabei werden zunächst wenigstens ein oder mehrere Parameter 16, 18 bestimmt, die einen Einfluss auf den Energie- bzw. Leistungsbedarf der Antriebsvorrichtung 22 der Scheibenwischereinrichtung 24 haben. Dabei wird beispielsweise über einen oder mehrere Regensensoren 26 bestimmt, ob es regnet oder nicht und ob die zu wischende Scheibe daher trocken oder nass ist. Des Weiteren wird die Fahrgeschwindigkeit bestimmt.

Die Fahrgeschwindigkeit kann beispielsweise über einen oder mehrere Drehzahlsensoren oder andere geeignete Sensoren erfasst werden. Des Weiteren kann die Fahrgeschwindigkeit auch beispielsweise anhand des Motormomentbedarfs der Antriebsvorrichtung 22 bestimmt bzw. abgeschätzt werden. Je höher der Motormomentbedarf des Wischermotors 22 z.B. beim Abwärtswischen ist, beispielsweise bei einer nassen oder trockenen Scheibe, um so höher ist auch die Geschwindigkeit des Fahrzeugs und die entsprechend Anströmungsgeschwindigkeit. Die Auswirkung der Anströmungsgeschwindigkeit auf die Windwiderstandskraft wurde zuvor bereits anhand von Fig. 3 erläutert.

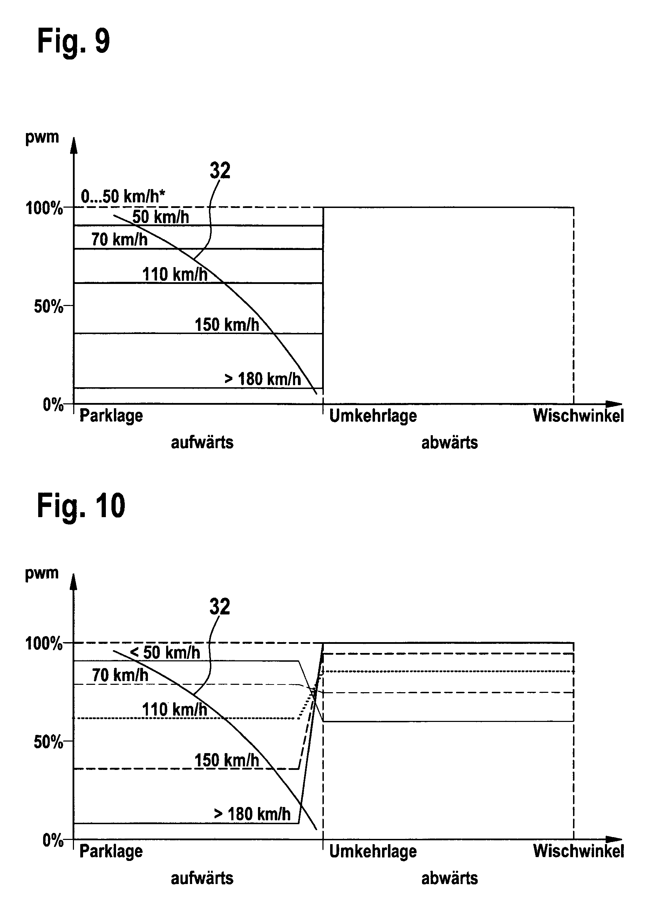

Wahlweise kann bei einer Scheibenwischereinrichtung 24 mit einem Wischergestänge 28 , wie in Fig. 7 gezeigt ist, zusätzlich die Wischhebelstellung WSH bzw. das Übersetzungsverhältnis des Wischergestänges bzw. der Momentenbedarf berücksichtigt werden. Bei Wischerantrieben mit Wischergestänge ändert sich der Momentenbedarf stark aufgrund des sich ändernden Übersetzungsverhältnisses. Abhängig von wenigstens einem oder mehreren Parametern, wie Zustand der Scheibe (nass oder trocken), Fahrzeugsgeschwindigkeit, Momentenbedarf und/oder Übersetzungsverhältnis des Wischergestänges wird die Antriebsvorrichtung 22 der Scheibenwischereinrichtung 24 gesteuert. Dabei können beispielsweise ein oder mehrere Diagramme mit Kennlinien bereitgestellt werden, wie nachfolgend beispielhaft anhand der Fig. 9 bis 12 erläutert wird. Anhand dieser Kennlinien der Diagramme kann in Abhängigkeit von den Parametern beispielsweise ein geeigneter Leistungsbedarf für die Antriebsvorrichtung 22 bestimmt werden, beispielsweise für die Wischeraufwärtsbewegung und/oder die Wischerabwärtsbewegung bzw. für bestimmte Wischhebelstellungen.

Gemäß der Erfindung wird das Verhalten der Scheibenwischereinrichtung 24 aufgrund der Umströmung dahin gehend genutzt, dass erstens bei einem niedrigen Leistungsbedarf die Leistungsaufnahme begrenzt wird. Zweitens kann beispielsweise im Zustand des Antreibens der Antriebsvorrichtung 22 bzw. des Wischermotors durch die Wischerhebel die Energie in eine entsprechende Fahrzeugbatterie rückgespeist werden. Die Parametrisierung der adaptiven Leistungszuweisung abhängig beispielsweise von der Fahrgeschwindigkeit und des Scheibenzustands erfolgt in einer fahrzeugspezifischen Applikation, die mit Simulationsmodellen (Kennlinienfeldern) durchgeführt werden kann und gegebenenfalls durch Fahrversuche und/oder Windkanalversuche abgesichert werden kann. Die Leistungszuweisung erfolgt also beispielsweise durch die Vorausberechnung des Leistungsbedarfs durch die genannten Eingangssignale innerhalb beispielsweise der Wischermotorelektronik 20. Bei fehlenden Informationssignalen, wie z.B. dem Fahrgeschwindigkeitssignal oder dem Regensensorsignal, kann durch eine Sicherheitsstrategie, die einwandfreie Wischerfunktion gewährleistet werden. Die adaptive Leistungsreduzierung wird dabei abgeschaltet, um zu vermeiden, dass bei einem hohen Drehmomentbedarf des Wischersystems aufgrund von Fahrtwind die Wischergeschwindigkeit reduziert wird.

Die Verarbeitung von Fahrgeschwindigkeits- und/oder Regensensorsignal-Informationen 16, 18, beispielsweise aus dem Fahrzeug-Bordnetz, kann in einer integrierten Steuerelektronik 20 der Antriebsvorrichtung 22 der Scheibenwischereinrichtung 24 erfolgen zur Berechnung des zugehörigen Leistungsbedarfs. Wahlweise kann zusätzlich auch die Lastmodell-Funktionalität berücksichtigt werden bzw. die Wischhebelstellung bzw. das Übersetzungsverhältnis des Wischhebelgestänges 28.

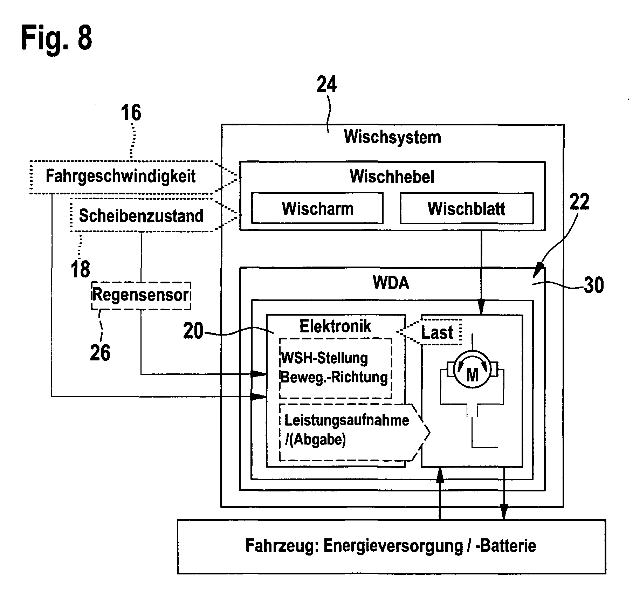

Fig. 8 zeigt des Weiteren den Informationsfluss bei der Nutzung der Fahrzeugeingangssignale am Beispiel einer Scheibenwischereinrichtung 24 mit Wischerdirektantrieb WDA. Genauer gesagt ist in Fig. 8 ein Diagramm dargestellt zur Steuerung einer Antriebsvorrichtung 22 einer Scheibenwischereinrichtung 24 gemäß einer zweiten Ausführungsform der Erfindung. Im Gegensatz zu der ersten Ausführungsform, bei welcher die Scheibenwischereinrichtung 24 ein Wischergestänge aufweist, weist die Scheibenwischereinrichtung 24 gemäß der zweiten Ausführungsform stattdessen einen Wischerdirektantrieb WDA 30 auf, wie zuvor genannt.

Zunächst werden, wie bei der ersten Ausführungsform, wenigstens ein oder mehrere Parameter bestimmt, die einen Einfluss auf den Energie- bzw. Leistungsbedarf der Antriebsvorrichtung 22 der Scheibenwischereinrichtung 24 haben. Hierbei wird z.B. über einen oder mehrere Regensensoren 26 bestimmt, ob die Scheiben trocken oder nass sind bzw. ob es regnet oder nicht. Darüber hinaus wird die Geschwindigkeit des Fahrzeugs bestimmt. Die Fahrgeschwindigkeit kann hierbei, wie zuvor beschrieben, z.B. über einen oder mehrere Drehzahlsensoren oder andere geeignete Sensoren erfasst werden. Alternativ oder zusätzlich kann die Fahrgeschwindigkeit auch z.B. anhand des Motormomentbedarfs der Antriebsvorrichtung 22 bestimmt bzw. abgeschätzt werden. Da die Scheibenwischereinrichtung 24 einen Wischerdirektantrieb WDA 30 aufweist fällt eine Berücksichtigung eines Übersetzungsverhältnisses eines Wischergestänges bei der zweiten Ausführungsform gemäß der Erfindung weg.

Anhand der erfasste Parameter und der Stellung des Wischhebels und seiner Bewegungsrichtung, d.h. Aufwärts- oder Abwärtsbewegung, wird der Leistungsbedarf der Antriebsvorrichtung 22 der Scheibenwischereinrichtung 24 bestimmt. Dabei können beispielsweise ein oder mehrere Diagramme mit Kennlinien bereitgestellt werden, anhand denen, in Abhängigkeit von den zuvor genannten Parametern, ein geeignete Leistungsbedarf für die Antriebsvorrichtung 22 bestimmt werden kann, beispielsweise für die Wischeraufwärtsbewegung und die Wischerabwärtsbewegung bzw. eine bestimmte Wischhebelstellung.

In Fig. 9 ist ein Beispiel einer fahrgeschwindigkeitsabhängigen Leistungsreduzierung beim Aufwärtswischen (pwm: Pulsweitenmodulation) gezeigt. Das Diagramm mit Kennlinien in Fig. 9, zeigt ein erstes Beispiel für eine Leistungsreduzierung der Antriebsvorrichtung in Abhängigkeit von einer Fahrzeuggeschwindigkeit und zwar bei einer Aufwärtswischbewegung der Wischreinrichtung.

Wie beispielsweise zuvor anhand der Fig. 1 und 2 beschrieben wurde, benötigt eine Scheibenwischereinrichtung bei einer Aufwärtsbewegung weniger Leistung bzw. Energie als bei einer Abwärtsbewegung. In dem Diagramm in Fig. 9 ist nun angegeben, dass beispielsweise bei einer Geschwindigkeit von höher als 180km/h nur 10% der Leistung der Antriebsvorrichtung benötigt werden, wenn der Wischerhebel in einer Aufwärtsbewegung ist. D.h. die Leistung der Antriebsvorrichtung bzw. des Wischermotors kann in diesem Fall um 90% reduziert werden. Bei einer Fahrzeuggeschwindigkeit von 50km/h benötigt die Antriebsvorrichtung dagegen 90% der Leistung, so dass hier eine Leistungsreduzierung immer noch um 10% möglich ist. Dies hängt damit zusammen, dass bei einer Aufwärtsbewegung des Wischerhebels, bei einer hohen Fahrzeuggeschwindigkeit durch die damit verbundene hohe Anströmgeschwindigkeit eine entsprechende zusätzliche Kraft erzeugt wird, die den Wischerhebel in diesem Fall zusätzlich nach oben drückt. Daher benötigt der Wischerhebel in der Aufwärtsbewegung weniger Energie als bei einer Abwärtsbewegung. Bei einer Abwärtsbewegung muss der Wischerhebel gegen diese Kraft andrücken. In dem Diagramm in Fig. 9 ist zusätzlich eine Luftwiderstandskurve 32 eingezeichnet, vergleichbar der wie sie in Fig. 3 gezeigt ist.

Weiter zeigt Fig. 10 ein Beispiel einer fahrgeschwindigkeitsabhängigen Leistungsreduzierung beim Auf- und Abwärtswischen. Genauer gesagt stellt das Diagramm mit Kennlinien in Fig. 10 ein zweites Beispiel dar für eine Leistungsreduzierung der Antriebsvorrichtung in Abhängigkeit von der Fahrzeuggeschwindigkeit sowohl bei einer Aufwärtswischbewegung wie bei einer Abwärtswischbewegung der Scheibenwischereinrichtung. Wie in Fig. 9 kann im Bereich der Aufwärtswischbewegung bis kurz vor der Umkehrlage bei einer Fahrzeuggeschwindigkeit von z.B. höher als 180km/h die Leistung der Antriebsvorrichtung um 90% reduziert werden. Erreicht nun die Scheibenwischereinrichtung die Umkehrlage bzw. geht in eine Abwärtswischbewegung über, so benötigt bei einer Fahrzeuggeschwindigkeit von z.B. höher als 180km/h die Antriebsvorrichtung 100% der Leistung. Es ist also keine Leistungsreduzierung bei der Antriebsvorrichtung möglich. Bei einer Fahrzeuggeschwindigkeit von z.B. 70km/h benötigt die Antriebsvorrichtung dagegen nur ca. 75% der Leistung. Daher kann die Leistung der Antriebsvorrichtung in diesem Fall auch bei der Abwärtswischbewegung reduziert werden und zwar entsprechend um ca. 25%. Dabei ist in dem Diagramm ebenfalls zusätzlich eine Luftwiderstandskurve 32 eingezeichnet, vergleichbar der wie sie in Fig. 3 gezeigt ist.

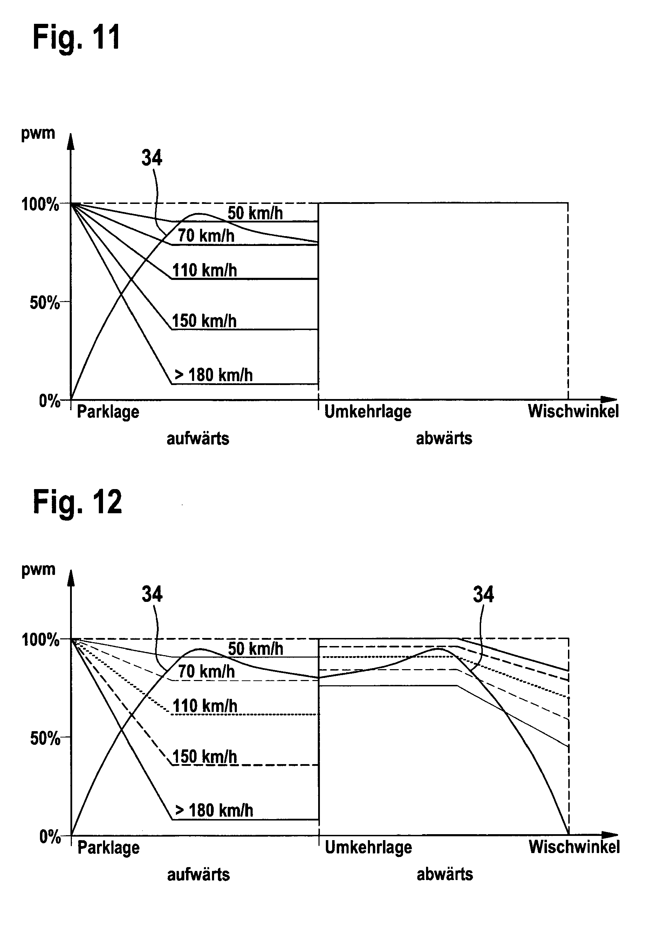

In Fig. 11 ist eine Leistungsreduzierung beim Aufwärtswischen gezeigt, die fahrgeschwindigkeitsabhängig ist und zusätzlich abhängig von der Wischhebelstellung arbeitet. Fig. 11 stellt hierbei ein weiteres Diagramm mit Kennlinien dar, das ein drittes Beispiel für eine Leistungsreduzierung der Antriebsvorrichtung in Abhängigkeit von einer Fahrzeuggeschwindigkeit zeigt und zwar bei einer Aufwärtswischbewegung der Scheibenwischereinrichtung. Dabei wird die Leistung innerhalb eines vorbestimmten Bereichs für eine Wischhebelstellung zunächst allmählich reduziert bis ab einer vorbestimmten Wischhebelstellung der vorgegebenen Endwert erreicht ist und beibehalten wird, bis der Wischhebel eine Umkehrlage erreicht hat. Bei einer Fahrzeuggeschwindigkeit von beispielsweise 150km/h wird nach Verlassen der Parklage des Wischerhebels die Leistung der Antriebsvorrichtung der Scheibenwischereinrichtung zunächst langsam reduziert bis ab einer vorbestimmten Wischhebelstellung der Endwert der Leistung von 66% erreicht ist.

Weitere ist in Fig. 12 eine Leistungsreduzierung beim Auf- und Abwärtswischen für einen Wischerdirektantrieb WDA gezeigt (abhängig von der Fahrgeschwindigkeit und der Wischhebelstellung, kein Einfluss durch Wischergestängeübersetzung). Fig. 12 zeigt hierbei ein Diagramm mit Kennlinien, gemäß einem vierten Beispiel für eine Leistungsreduzierung der Antriebsvorrichtung in Abhängigkeit von einer Fahrzeuggeschwindigkeit, bei einer Aufwärts- und Abwärtswischbewegung der Wischreinrichtung. Die Scheibenwischereinrichtung mit der Antriebsvorrichtung ist hierbei eine Scheibenwischereinrichtung mit einem Wischerdirektantrieb WDA.

Wie in Fig. 11, wird die Leistung der Antriebsvorrichtung allmählich innerhalb eines vorbestimmten Bereichs für die Stellung des Wischhebels reduziert. Erreicht der Wischhebel eine vorbestimmte Wischhebelstellung beim Aufwärtswischen, so wird die Leistung schließlich bis auf den maximalen Wert reduziert. Beispielsweise wird die Leistung der Antriebsvorrichtung bei einer Geschwindigkeit von größer als 180km/h beim Aufwärtswischen allmählich um ca. 91,6% reduziert auf eine Leistung von ca. 8,4%, bei einer vorbestimmten Stellung des Wischhebels beim Aufwärtswischen. Erreicht der Wischhebel die Umkehrlage und geht in eine Abwärtswischbewegung über, so wird der Leistungsbedarf der Antriebsvorrichtung zunächst auf einen konstanten vorbestimmten Wert eingestellt, bis der Wischhebel eine vorbestimmte Stellung erreicht hat. Nach Überschreiten dieser Wischhebelstellung beim Abwärtswischen, wird die Leistung der Antriebsvorrichtung allmählich abgesenkt. Weist das Fahrzeug beispielsweise eine Geschwindigkeit von höher als 180km/h auf, so wird die Leistung der Antriebseinrichtung bei Erreichen der Umkehrlage zunächst auf volle 100% eingestellt, da die Scheibenwischereinrichtung aufgrund der hohen Fahrgeschwindigkeit und der damit verbundenen hohen Anströmungsgeschwindigkeit bei der Abwärtsbewegung am meisten Energie bzw. Leistung braucht. Bei Erreichen einer vorbestimmten Wischhebelposition beim Abwärtswischen wird die Leistung von vormals 100% (bei einer Fahrgeschwindigkeit von größer 180km/h) allmählich abgesenkt, beispielsweise um 16% auf eine Leistung von nunmehr nur noch 84% bis die Scheibenwischereinrichtung wieder die Parklage erreicht hat.

In den Fig. 11 und 12 ist hierbei zusätzlich die Kurve 34 für die Luftwiderstandskraft eingezeichnet, wie sie vergleichbar in Fig. 4 dargestellt ist. Dabei ergibt sich, dass bei einem Wischhebelwinkel von 0° bis 45° die Luftwiderstandskraft allmählich zunimmt und bei einer Wischaufwärtsbewegung den Wischerhebel zusätzlich unterstützt. Entsprechend wird auch die Leistung beim Aufwärtswischen, wie in Fig. 11 und 12 gezeigt ist, beispielsweise in einem Bereich von 0° bis ca. 45° erst langsam von 100% auf einen vorbestimmten maximalen Wert reduziert. Für den Bereich ab beispielsweise 30° wird dagegen die Leistung, gemäß der Fig. 11 und 12, auf einen vorbestimmten Endwert abgesenkt.

Gemäß der Erfindung, wie sie zuvor beschrieben wurde, wird die Energieaufnahme einer Scheibenwischereinrichtung, wie beispielsweise eine Front- oder HeckScheibenwischereinrichtung bei einem Fahrzeug, reduziert. Durch kann ein zusätzlicher Beitrag zur Reduzierung des Kraftstoffverbrauchs des Fahrzeugs erreicht werden. Des Weiteren kann der Funktionsumfang bei einer Scheibenwischereinrichtung mit Elektronik erweitert werden auch im Hinblick der zunehmenden Einführung der Hybridtechnik und einem effizienteren Energiemanagement. Die Erfindung hat den Vorteil, dass die Antriebsvorrichtung bzw. der Wischermotor als Generator genutzt wird. Des Weiteren kann die Leistungs-/Stromaufnahme des Wischermotors abhängig von dem tatsächlichen Leistungsbedarf eingestellt werden. Erfindungsgemäß wird eine Überschussleistung des Wischermotors in eine Fahrzeugbatterie eingespeist werden bzw. an einen anderen Verbraucher abgegeben werden. Die Leistungsreduzierung kann dabei abhängig von einem oder mehreren Parametern erfolgen, beispielsweise der Wischerbewegungsrichtung, der Fahrgeschwindigkeit, der Wischerstellung des Scheibenzustands. Weiter kann die Leistungsreduzierung auch abhängig von dem Übersetzungsverhältnis des Wischergestänges erfolgen. Die Parametrisierung der Leistungsreduzierung kann fahrzeugspezifisch bzw. Wischermotor spezifisch erfolgen. Wahlweise können zusätzliche eine oder mehrere Leitungen am Motorstecker für eine separate Leistungsführung vorgesehen werden. Die Erfindung kann beispielsweise bei Scheibenwischereinrichtungen mit einem Wischergestänge und einem Elektronik-Reversiermotor eingesetzt werden als auch bei Scheibenwischereinrichtungen mit einem Wischerdirektantrieb ohne Wischergestänge.

## Patentansprüche

1. Scheibenwischereinrichtung (24), insbesondere für ein Kraftfahrzeug, wobei die Scheibenwischereinrichtung (24) wenigstens eine Antriebsvorrichtung (22) aufweist, welche über eine Steuerungseinrichtung (20) steuerbar ist,
wobei
die Steuerungseinrichtung (20) den Leistungsbedarf der Scheibenwischereinrichtung (24) in Abhängigkeit von wenigstens einem oder mehreren Parametern (16, 18) steuert, die einen Einfluss auf den Leistungsbedarf der jeweiligen Antriebsvorrichtung (22) der Scheibenwischereinrichtung (20) haben, wobei die Parameter mindestens die Fahrgeschwindigkeit und/oder den Scheibenzustand umfassen, **dadurch gekennzeichnet, dass** ein Leistungsüberschuss der Scheibenwischereinrichtung (24) in eine Batterieeinrichtung des Fahrzeugs einspeisbar ist.

2. Scheibenwischereinrichtung nach Anspruch 1, **dadurch gekennzeichnet, dass** der Scheibenzustand beispielsweise über wenigstens einen Regensensor (26) bestimmbar ist, wobei der Scheibenzustand beispielsweise als nasse Scheibe bestimmbar ist oder trockene Scheibe.

3. Scheibenwischereinrichtung nach wenigstens einem der Ansprüche 1 oder 2, **dadurch gekennzeichnet, dass** als Parameter, die einen Einfluss auf den Leistungsbedarf der jeweiligen Antriebsvorrichtung (22) der Scheibenwischereinrichtung (24) haben, beispielsweise der Wischhebelwinkel, die Wischbewegungsrichtung, ein Übersetzungsverhältnis eines Wischhebelgestänges (28) der Scheibenwischereinrichtung (24) und/oder eine Wischergeschwindigkeit bestimmbar sind.

4. Scheibenwischereinrichtung nach wenigstens einem der Ansprüche 1 bis 3, **dadurch gekennzeichnet, dass** bei einer vorbestimmten Fahrgeschwindigkeit oder einem vorbestimmten Fahrgeschwindigkeitsbereich bei einer Wischeraufwärtsbewegung und/oder bei einer Wischerabwärtsbewegung die Leistung der Antriebsvorrichtung gemäß ihres Leistungsbedarfs anpassbar ist, wobei beispielsweise wenigstens ein oder mehrere Kennfelder abrufbar sind, in welchem beispielsweise bei einer vorbestimmten Fahrgeschwindigkeit und Wischerbewegungsrichtung eine geeignete Leistung bzw. ein Leistungsbedarf der Antriebsvorrichtung (22) vorgegeben ist.

5. Scheibenwischereinrichtung nach Anspruch 4, **dadurch gekennzeichnet, dass** zusätzlich wenigstens der Scheibenzustand, der Wischhebelwinkel und/oder das Übersetzungsverhältnis des Wischergestänges (28) berücksichtigbar sind.

6. Scheibenwischereinrichtung nach wenigstens einem der Ansprüche 1 bis 5, **dadurch gekennzeichnet, dass** als Leistung bzw. Leistungsbedarf jeweils konstante Werte vorgegeben sind und/oder die Werte zumindest in einem Bereich variierbar sind, beispielsweise abhängig von der Wischhebelstellung.

7. Scheibenwischereinrichtung nach wenigstens einem der Ansprüche 1 bis 6, wobei die Scheibenwischereinrichtung (24) beispielsweise eine Heck- und/oder Frontscheibenwischereinrichtung ist und beispielsweise einen Wischerdirektantrieb (30) oder einen Wischerantrieb mit einem Wischergestänge (28) aufweist.

8. Verfahren zur Steuerung einer Scheibenwischereinrichtung, insbesondere für ein Kraftfahrzeug, mit den Schritten:
- Bereitstellen einer Scheibenwischereinrichtung (24) mit wenigstens einer Antriebsvorrichtung (22), welche über eine Steuerungseinrichtung (20) steuerbar ist,
- Bestimmen eines oder mehrerer Parameter (16, 18) die einen Einfluss auf den Leistungsbedarf der jeweiligen Antriebsvorrichtung (22) der Scheibenwischereinrichtung (24) haben, wobei die Parameter mindestens die Fahrgeschwindigkeit und/oder den Scheibenzustand umfassen,
- Steuern des Leistungsbedarfs der Scheibenwischereinrichtung (24) in Abhängigkeit von dem jeweiligen Parameter,
- Einspeisen eines Leistungsüberschusses der Scheibenwischereinrichtung in eine Batterieeinrichtung des Fahrzeugs.

9. Verfahren nach Anspruch 8, **dadurch gekennzeichnet, dass** als Parameter, die einen Einfluss auf den Leistungsbedarf der jeweiligen Antriebsvorrichtung (22) der Scheibenwischereinrichtung (24) haben, beispielsweise ein Wischhebelwinkel, eine Wischbewegungsrichtung, ein Übersetzungsverhältnis eines Wischhebelgestänges (28) der Scheibenwischereinrichtung (24) und/oder eine Wischergeschwindigkeit bestimmbar sind.

## Claims

1. Windscreen wiper device (24), in particular for a motor vehicle, wherein the windscreen wiper device (24) has at least one drive unit (22) which can be controlled by means of a control device (20),
wherein
the control device (20) controls the power demand of the windscreen wiper device (24) as a function of at least one or more parameters (16, 18) which influence the power demand of the respective drive unit (22) of the windscreen wiper device (20), wherein the parameters comprise at least the velocity and/or the state of the windscreen, **characterized in that** excess power of the windscreen wiper device (24) can be fed into a battery device of the vehicle.

2. Windscreen wiper device according to Claim 1, **characterized in that** the state of the windscreen can be determined, for example, by means of at least one rain sensor (26), wherein the state of the windscreen can be determined, for example, as a wet windscreen or dry windscreen.

3. Windscreen wiper device according to at least one of Claims 1 and 2, **characterized in that**, for example, the wiper lever angle, the direction of movement of the wiper, a transmission ratio of a wiper lever linkage (28) of the windscreen wiper device (24) and/or a wiper speed can be determined as parameters which influence the power demand of the respective drive unit (22) of the windscreen wiper device (24).

4. Windscreen wiper device according to at least one of Claims 1 to 3, **characterized in that** the power of the drive unit can be adapted according to its power demand during an upward wiper movement and/or during a downward wiper movement at a predetermined velocity or in a predetermined velocity range, wherein, for example, it is possible to retrieve one or more characteristic diagrams in which, for example, a suitable power level or power demand of the drive unit (22) is predefined for a predetermined velocity and direction of movement of the wiper.

5. Windscreen wiper device according to Claim 4, **characterized in that** in addition at least one state of the windscreen, the wiping lever angle and/or the transmission ratio of the wiper linkage (28) can be taken into account.

6. Windscreen wiper device according to at least one of Claims 1 to 5, **characterized in that** in each case constant values are predefined as a power level or power demand and/or the values can be varied at least in a range, for example as a function of the position of the wiper lever.

7. Windscreen wiper device according to at least one of Claims 1 to 6, wherein the windscreen wiper device (24) is for example a rear windscreen wiper device and/or front windscreen wiper device and has for example a wiper direct drive (30) or a wiper drive with a wiper linkage (28).

8. Method for controlling a windscreen wiper device, in particular for a motor vehicle, comprising the steps:
- making available a windscreen wiper device (24) with at least one drive unit (22) which can be controlled by means of a control device (20),
- determining one or more parameters (16, 18) which influence the power demand of the respective drive unit (22) of the windscreen wiper device (24), wherein the parameters comprise at least the velocity and/or the state of the windscreen,
- controlling the power demand of the windscreen wiper device (24) as a function of the respective parameter, and
- feeding excess power of the windscreen wiper device into a battery device of the vehicle.

9. Method according to Claim 8, **characterized in that**, for example, a wiper lever angle, a direction of movement of the wiper, a transmission ratio of a wiper lever linkage (28) of the windscreen wiper device (24) and/or a wiper speed can be determined as parameters which influence the power demand of the respective drive unit (22) of the windscreen wiper device (24).

## Revendications

1. Dispositif d'essuie-glace (24), en particulier pour un véhicule automobile, le dispositif d'essuie-glace (24) présentant au moins un dispositif d'entraînement (22) qui peut être commandé par le biais d'un dispositif de commande (20),
le dispositif de commande (20) commandant le besoin en puissance du dispositif d'essuie-glace (24) en fonction d'au moins un ou plusieurs paramètres (16, 18) qui ont une influence sur le besoin en puissance du dispositif d'entraînement respectif (22) du dispositif d'essuie-glace (24), les paramètres comprenant au moins la vitesse de conduite et/ou l'état des vitres, **caractérisé en ce qu'**un excès de puissance du dispositif d'essuie-glace (24) peut être stocké dans un dispositif de batterie du véhicule.

2. Dispositif d'essuie-glace selon la revendication 1, **caractérisé en ce que** l'état des vitres peut être déterminé par exemple par le biais d'au moins un détecteur de pluie (26), l'état des vitres pouvant être déterminé par exemple en tant que vitre humide ou vitre sèche.

3. Dispositif d'essuie-glace selon au moins l'une quelconque des revendications 1 ou 2, **caractérisé en ce qu'**en tant que paramètres qui ont une influence sur le besoin en puissance du dispositif d'entraînement respectif (22) du dispositif d'essuie-glace (24), on peut déterminer par exemple l'angle du levier d'essuie-glace, la direction du mouvement d'essuyage, un rapport de transmission d'une tringlerie du levier d'essuie-glace (28) du dispositif d'essuie-glace (24) et/ou une vitesse d'essuie-glace.

4. Dispositif d'essuie-glace selon au moins l'une quelconque des revendications 1 à 3, **caractérisé en ce que** dans le cas d'une vitesse de conduite prédéterminée ou d'une plage de vitesses de conduite prédéterminée dans le cas d'un mouvement ascendant de l'essuie-glace et/ou dans le cas d'un mouvement descendant de l'essuie-glace, la puissance du dispositif d'entraînement peut être adaptée en fonction de son besoin en puissance, par exemple au moins un ou plusieurs champs caractéristiques pouvant être appelés, dans lequel ou lesquels par exemple, pour une vitesse de conduite et une direction de déplacement de l'essuie-glace prédéterminées, une puissance appropriée ou un besoin en puissance approprié du dispositif d'entraînement (22) est prédéfini(e).

5. Dispositif d'essuie-glace selon la revendication 4, **caractérisé en ce qu'**en outre au moins l'état des vitres, l'angle du levier d'essuie-glace et/ou le rapport de transmission de la tringlerie de l'essuie-glace (28) peuvent être pris en compte.

6. Dispositif d'essuie-glace selon au moins l'une quelconque des revendications 1 à 5, **caractérisé en ce qu'**en tant que puissance ou besoin en puissance, on prédéfinit à chaque fois des valeurs constantes et/ou les valeurs sont variables au moins dans une plage, par exemple en fonction de la position du levier d'essuie-glace.

7. Dispositif d'essuie-glace selon au moins l'une quelconque des revendications 1 à 6, dans lequel le dispositif d'essuie-glace (24) est par exemple un dispositif d'essuie-glace de vitre arrière et/ou avant et présente par exemple un entraînement direct d'essuie-glace (30) ou un entraînement d'essuie-glace avec une tringlerie d'essuie-glace (28).

8. Procédé de commande d'un dispositif d'essuie-glace, en particulier pour un véhicule automobile, comprenant les étapes suivantes :
- fourniture d'un dispositif d'essuie-glace (24) comprenant au moins un dispositif d'entraînement (22) qui peut être commandé par le biais d'un dispositif de commande (20),
- détermination d'un ou de plusieurs paramètres (16, 18) qui ont une influence sur le besoin en puissance du dispositif d'entraînement respectif (22) du dispositif d'essuie-glace (24), les paramètres comprenant au moins la vitesse de conduite et/ou l'état des vitres,
- commande du besoin en puissance du dispositif d'essuie-glace (24) en fonction du paramètre respectif,
- stockage d'un excès de puissance du dispositif d'essuie-glace dans un dispositif de batterie du véhicule.

9. Procédé selon la revendication 8, **caractérisé en ce qu'**on peut déterminer en tant que paramètres qui ont une influence sur le besoin en puissance du dispositif d'entraînement respectif (22) du dispositif d'essuie-glace (24), par exemple un angle du levier d'essuie-glace, une direction du mouvement d'essuyage, un rapport de transmission d'une tringlerie du levier d'essuie-glace (28) du dispositif d'essuie-glace (24) et/ou une vitesse d'essuie-glace.
